(19) **Europäisches Patentamt**

**European Patent Office**

**Office européen des brevets**

(11) Veröffentlichungsnummer: **0 347 741**
**A2**

(12) ## EUROPÄISCHE PATENTANMELDUNG

(21) Anmeldenummer: **89110839.1**

(51) Int. Cl.⁴: **C09J 3/00**

(22) Anmeldetag: **15.06.89**

(30) Priorität: **23.06.88 DE 3821150**

(43) Veröffentlichungstag der Anmeldung:
**27.12.89 Patentblatt 89/52**

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Wüst, Willi, Dr.**
**Fasanenring 32**
**D-4030 Ratingen(DE)**
Erfinder: **Schulz, Paul, Dr.**
**Auf dem Scheidt 35**
**D-5600 Wuppertal(DE)**
Erfinder: **Gardenier, Karl-Josef**
**Boschstrasse 99**
**D-4000 Düsseldorf(DE)**
Erfinder: **Hempel, Hans-Ulrich, Dr.**
**Wiesengrund 5**
**D-5063 Overath-Vilkerath(DE)**
Erfinder: **Kik, Michael**
**Otto-Hahn-Strasse 66**
**D-4018 Langenfeld(DE)**
Erfinder: **Lauer, Gerd**
**Stresemannstrasse 22**
**D-5657 Haan(DE)**

(54) **Verfahren zum Konfektionieren von Schmelzklebstoffen; Schmelzklebstoffkörper.**

(57) Die Erfindung betrifft ein Verfahren zum Konfektionieren von Schmelzklebstoffen, insbesondere von Haftschmelzklebstoffen. Um ein derartiges Verfahren besonders wirtschaftlich durchzuführen, wird vorgeschlagen, daß der geschmolzene Klebstoff in eine oder mehrere Kokillen gegossen wird, deren insgesamt flexible Innenseiten aus einem ausreichend temperaturbeständigen Elastomer bestehen, insgesamt ausreichend flexibel sind und ausreichende Antihafteigenschaften aufweisen, so daß die eingegossenen Klebstoffkörper durch ein geeignetes Entformmittel im wesentlichen vollständig aus der Kokille gelöst werden, nachdem die Klebstoffkörper derart stark abgekühlt sind, daß sie eine ausreichende Formstabilität aufweisen.

Die Erfindung betrifft ferner einen Schmelzklebstoffkörper, insbesondere einen Haftschmelzklebstoffkörper. Um das Agglomerationsvermögen zu verringern, wird vorgeschlagen, daß dieser Körper die geometrische Gestalt einer Kugel oder eines Ellipsoids oder eines Segments davon aufweist.

FIG. 1

## Verfahren zum Konfektionieren von Schmelzklebstoffen; Schmelzklebstoffkörper

Die Erfindung betrifft ein Verfahren zum Konfektionieren von Schmelzklebstoffen, insbesondere von Haftschmelzklebstoffen.

Schmelzklebstoffe, auch kurz "hot melts" genannt, werden zum Kleben auf den verschiedensten Gebieten der Technik verwendet. Unter den Schmelzklebstoffen nehmen die Haftschmelzklebstoffe, d.h. solche mit einer Dauerklebrigkeit, einen besonderen Raum ein. Aufgrund dieser speziellen Eigenschaft, auch bei Raumtemperatur noch klebrig zu sein, verursachen sie bei der Konfektionierung besondere Schwierigkeiten.

Zum Konfektionieren dieser Klebstoffe sind verschiedene Techniken entwickelt worden (vergl. z.B. Zeitschrift "Seifen -Öle - Fette - Wachse" (1976), S. 279 - 282). In dem einen Verfahren, dem Pastillier-Verfahren, wird die Schmelze in Einzelvolumina von etwa Tropfengröße zerteilt, die dann auf eine endlos umlaufende Kühlfläche abgesetzt werden und so durch Wärmeverlust zu Granalien in Pastillenform erstarren. In einem anderen Verfahren, dem Streifengranulier-Verfahren, wird die Schmelze in Streifen zerteilt, die ebenfalls auf eine endlos umlaufende Kühlfläche aufgepreßt werden. Hier wird die endgültige Form des Klebstoffkörpers aber erst nach dem Erstarren erhalten, indem der ausgeformte Streifen quer geschnitten wird. Nach dem Konfektionieren werden die Klebstoffkörper bepudert, um das Agglomerationsvermögen der dauerklebrigen Körper herabzusetzen. Ansonsten würden die Körper durch Klebrigkeit oder Kaltfluß wieder verblocken.

In einem anderen bekannten Verfahren wird ein Strang eines Haftschmelzklebstoffes aus der Schmelze gegossen, dann mit einem Schlauch eines nicht dauerklebrigen Klebstoffes überzogen und schließlich durch flaches Abpressen quer zur Strangachse in kissenartige, an der Oberfläche nicht mehr dauerklebrige Körper zerteilt.

Bei dem Pastillier- und Streifengranulier-Verfahren erhält man relativ kleine Klebstoffkörper, bei denen das Puder einen relativ großen Anteil im Vergleich zu dem Klebstoff ausmacht. Da das Puder in den Klebstoff eindringen kann und damit im allgemeinen eine störende Fremdsubstanz darstellt, werden möglichst große Klebstoffkörper angestrebt. Diese lassen sich jedoch im Pastillier- und Streifengranulier-Verfahren nicht erreichen. Im zuletzt genannten Verfahren, bei dem ein Klebstoffstrang mit einer Schicht eines nicht dauerklebrigen Klebstoffs überzogen wird, stellt die Außenschicht zwar keinen Fremdkörper gegenüber dem Schmelzklebstoff dar und kann diesen damit auch nicht verunreinigen, aber das Verfahren ist nicht befriedigend, weil die durch das flache Abpressen entstandenen Verschlußstellen sich oft öffnen. Dieses Verfahren ist auch kostspieliger als die anderen.

Um die genannten Nachteile zu vermeiden, ist ein weiteres Verfahren zum Konfektionieren von Schmelzklebstoffen bekannt. In diesem Verfahren werden die Klebstoffmassen in Siliconbeschichtete Papiergebinde abgegossen. Die Agglomeration der einzelnen Klebstoffkörper wird hier dadurch vermieden, daß das Papiergebinde an den Klebstoffkörpern belassen wird, bis diese beim Verbraucher wieder eingeschmolzen werden. Da das Siliconbeschichtete Papiergebinde nur einmal verwendet wird, ist dieses Verfahren ebenfalls verhältnismäßig teuer.

Der Erfindung liegt die Aufgabe zugrunde, ein Verfahren zum Konfektionieren von Schmelzklebstoffen, insbesondere von Haftschmelzklebstoffen, zu entwickeln, welches wirtschaftlicher ist und gleichzeitig die Beimengung von als Fremdsubstanz wirkenden Antihaftmitteln herabsetzt.

Diese Aufgabe wird erfindungsgemäß dadurch gelöst, daß der geschmolzene Klebstoff in eine oder mehrere Kokillen gegossen wird, deren insgesamt flexible Innenseiten aus einem ausreichend temperaturbeständigem Elastomer bestehen, insgesamt ausreichend flexibel sind und ausreichende Antihafteigenschaften aufweisen, so daß die eingegossenen Klebstoffkörper durch ein geeignetes Entformmittel im wesentlichen vollständig aus der Kokille gelöst werden, nachdem die Klebstoffkörper derart stark abgekühlt sind, daß sie eine ausreichende Formstabilität aufweisen.

Die Versuche zeigen darüber hinaus überraschenderweise, daß beim Ausformen der Klebstoffkörper aus geeigneten Siliconformen keine Antihaftmittel notwendig sind und die Klebstoffkörper sich daher durch bloßes mechanisches Ausdrücken aus der Form lösen lassen. In diesem Verfahren gibt es praktisch auch keine Begrenzung in der geometrischen Größe der Klebstoffkörper wie beim Pastillier- oder Streifengranulier-Verfahren. Da diese Form, z. B. in einem kontinuierlichen Prozeß, immer wieder verwendet werden kann, ist das erfindungsgemäße Verfahren auch wirtschaftlicher.

Da die Ausformung der durch Abkühlung erstarrten Gießkörper durch mechanischen Druck / elastische Verformung der Siliconkokillen erfolgt, sind die Gießformen zweckmäßigerweise insgesamt flexibel / elastisch. Dabei können Sie entweder voll aus geeignetem Silikon-Elastomeren hergestellt oder in ausreichender Schichtdicke mit diesem Material innen beschichtet sein.

Das obengenannte Entformmittel kann entweder aus Druck auf eine oder mehrere Außenseiten der Kokille bestehen oder es kann darin bestehen, daß die Kokille, z. B. von außen, in Vibration versetzt wird. Andererseits kann aber das Entformmittel auch in einem Strecken der Kokille bestehen. In letzterem Fall kann z. B. die aus mehreren Kokillen bestehende Gießform, die ebenfalls ausreichend elastisch ist, in eine geeignete Richtung gestreckt werden, so daß die dadurch verformten Kokillen die erkalteten und formstabilen Klebstoffkörper heraussprengen.

Erfindungsgemäß reicht eine bestimmte Verteilung des äußeren Druckes auf die vorzugsweise konischen Außenseiten der Kokillen aus, um die Klebstoffkörper aus diesen zu lösen. Besonders einfach wird das erfindungsgemäße Konfektionieren jedoch, wenn die Kokille derart elastisch und geometrisch geformt ist, daß die Klebstoffkörper sich durch Druck auf die Unterseiten der Böden der Kokillen herauslösen. Dann nämlich reicht eine einzige Druck- oder Schubrichtung schon aus. In diesem Fall können die Körper maschinell mittels Ausformstempel besonders einfach aus der Form gelöst werden.

Die Kokillen sollten ein derart gutes Rückstellvermögen aufweisen, daß sie nach dem Herauslösen der Klebstoffkörper wieder ihre ursprüngliche Form annehmen. Dann brauchen die verformten Kokillen nicht wieder durch z. B. Druck in ihre Ausgangsform zurückgestellt werden. Damit wird ein weiterer Arbeitsschritt eingespart.

Das vollständige Herauslösen der Klebstoffkörper aus den Kokillen wird vereinfacht, wenn die Kokillen sich zu den Öffnungen verbreiternde Querschnitte aufweisen. Durch solche konsähnlichen Formen wird dem Herauslösen der Körper kein durch Formschluß bewirkter Widerstand entgegengesetzt.

Für das Konfektionieren ist es besonders vorteilhaft, wenn die Innenflächen der Kokillen keine Kanten oder Ecken aufweisen. Dadurch wird vermieden, daß die einzelnen Klebstoffkörper sich großflächig berühren und damit besonders stark aneinanderhaften.

Zusätzlich ist es möglich, die Innenseiten der Kokillen mit erhabenen und/oder eingefurchten Zeichen zu versehen. Diese Zeichen übertragen sich beim Abgießen des Klebstoffs nämlich auf die Klebstoffkörper. Daher ist man bei der Kennzeichnung des Klebstoffs nicht auf die Verpackung beschränkt, sondern kann dazu den Klebstoffkörper selbst benutzen. So können diesen Zeichen aus dem Firmennamen oder einer Materialkennzeichnung bestehen.

Im erfindungsgemäßen Verfahren kann u. a. handelsüblicher Siliconkautschuk verwendet werden. Besonders vorteilhaft ist jedoch, wenn der Siliconkautschuk aus Dimethylpolysiloxan besteht. Die Silicon-Form wird durch Kaltvulkanisieren hergestellt. Wichtig bei der Auswahl des Silicons sind die Temperaturbestandigkeit, die Antihafteigenschaften und ein gutes Rückstellverhalten.

Die Erfindung betrifft ferner die geometrische Form der Schmelzklebstoffkörper, insbesondere der Haftschmelzklebstoffkörper. Hierbei stellt sich das Problem, die Agglomerationsfähigkeit zu verringern und eine Schüttfähigkeit der antihaftbeschichteten Körper zu gewährleisten.

Diese Aufgabe wird erfindungsgemäß dadurch gelöst, daß der Schmelzklebstoffkörper die geometrische Gestalt einer Kugel oder eines Ellipsoids oder eines Segments davon hat. Die Kugel - oder Ellipsoidgestalt - verhindert nämlich ein großflächiges Berühren benachbarter Klebstoffkörper. Andererseits ist es vorteilhaft, wenn der Körper die Gestalt eines Segments einer Kugel oder eines Ellipsoids hat, da solche geometrischen Formen leichter mittels des genannten erfindungsgemäßen Gießverfahrens herzustellen sind.

Um eine weitere Möglichkeit zur Warenkennzeichnung zu schaffen, ist es vorteilhaft, wenn der Schmelzklebstoffkörper erhabene und/oder eingefurchte Zeichen auf seiner Oberfläche aufweist.

Die Erfindung ist nachstehend anhand der Zeichnungen näher erläutert.

Es zeigen:

Figur 1 einen Querschnitt einer mit einem Klebstoffkörper gefüllten Kokille,

Figur 2 einen Querschnitt durch eine Kokille und

Figur 3 eine Siliconkautschuk-Gießform mit vielen solcher Kokillen.

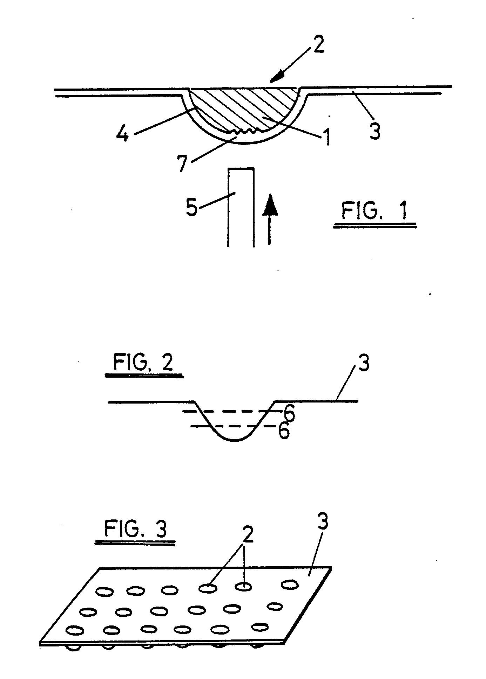

In Figur 1 ist der geschmolzene Klebstoff (1) in eine Kokille (2) einer Gießform (3) eingegossen worden. Die Kokille ist annähernd halbkugelförmig. Es handelt sich hier um eine formstabile, elastische, Form, die den Vorteil hat, daß an beliebigen Stellen Kräfte eingeleitet werden können, um den Klebstoff (1) wieder aus der Gießform (3) herauszulösen. Durch die guten Antihafteigenschaften der Innenseiten (4) der Kokillen (2) lassen sich die Klebstoffkörper (1) leicht und vollständig aus den Kokillen (2) entfernen.

In diesem Fall ist die einfachste Methode zum Herauslösen der Klebstoffkörper gewählt. Ein Stempel (5) drückt von unten auf die Unterseite des Bodens der Kokille (2), also in Pfeilrichtung.

Die Gießform (3) weist an der Innenseite (4) der Kokille (2) ein erhabenes, spiegelbildliches Zeichen (7) auf, das den Firmennamen und die Produktkennzeichnung darstellt. Dieses Zeichen (7) findet sich nach dem Herausdrücken des Klebstoffkörpers darauf als eingefurchtes Zeichen wieder.

Wie oben ausgeführt wurde, ist eine annähernd konische Form der Kokille vorteilhaft. Dies bedeutet präziser gefaßt, daß die parallel zur Hauptfläche der Gießform (3) und durch die Kokille verlaufenden Querschnitte (6) sich zu den Öffnungen hin verbreitern sollten.

In Figur 3 ist eine eine Vielzahl von Kokille (2) enthaltende Gießform (3) perspektivisch dargestellt. Mit solchen Formen kann in kurzer Zeit eine sehr große Menge von Schmelzklebstoffen konfektioniert werden.

### Bezugszeichenliste

1 Klebstoff, Klebstoffkörper
2 Kokille
3 Gießform
4 Innenseiten
5 Stempel
6 Querschnitte
7 Zeichen

### Ansprüche

1. Verfahren zum Konfektionieren von Schmelzklebstoffen, insbesondere von Haftschmelzklebstoffen, dadurch gekennzeichnet,
daß der geschmolzene Klebstoff (1) in eine oder mehrere Kokillen (2) gegossen wird, deren insgesamt flexible Innenseiten (4) aus einem ausreichend temperaturbeständigen Elastomer bestehen und insgesamt ausreichend flexibel sind und ausreichende Antihafteigenschaften aufweisen, so daß die eingegossenen Klebstoffkörper (1) durch ein geeignetes Entformmittel im wesentlichen vollständig aus der Kokille (2) gelöst werden, nachdem die Klebstoffkörper (1) derart stark abgekühlt sind, daß sie eine ausreichende Formstabilität aufweisen.

2. Verfahren nach Anspruch 1, dadurch gekennzeichnet, daß das Elastomer eine Siliconkautschuk ist.

3. Verfahren nach Anspruch 1 oder 2, dadruch gekennzeichnet, daß das Entformmittel aus Druck auf eine oder mehrere Außenseiten der Kokille (2) besteht.

4. Verfahren nach Anspruch 1 oder 2, dadurch gekennzeichnet, daß das Entformmittel in einem Vibrieren der Kokille (2) besteht.

5. Verfahren nach Anspruch 1 oder 2, dadurch gekennzeichnet, daß das Entformmittel in einem Strecken der Kokille (2) besteht.

6. Verfahren nach einem oder Ansprüche 1 bis 5, dadurch gekennzeichnet,
daß die Kokille (2) derart elastisch und geometrisch geformt ist, daß die Klebstoffkörper (1) sich durch Druck auf die Unterseiten der Böden der Kokille (2) herauslösen.

7. Verfahren nach einem der Ansprüche 1 bis 6, dadurch gekennzeichnet, daß die Kokille (2) ein derart gutes Rückstellvermögen aufweist, daß sie nach dem Herauslösen der Klebstoffkörper (1) wieder ihre ursprüngliche Form annimmt.

8. Verfahren nach einem der Ansprüche 1 bis 7, dadurch gekennzeichnet,
daß die Kokille (2) sich zu den Öffnungen verbreiternde Querschnitte aufweist.

9. Verfahren nach einem der Ansprüche 1 bis 8, dadurch gekennzeichnet,
daß die Innenflächen (4) der Kokille (2) keine Kanten oder Ecken aufweisen.

10. Verfahren nach einem der Ansprüche 1 bis 9, dadurch gekennzeichnet,
daß die Innenseiten (4) der Kokille (2) erhabene und/oder eingefurchte Zeichen (7) aufweisen.

11. Verfahren nach einem der Ansprüche 2 bis 10, dadurch gekennzeichnet,
daß der Siliconkautschuk aus Dimethylpolysiloxan besteht.

12. Schmelzklebstoffkörper, insbesondere Haftschmelzklebstoffkörper, gekennzeichnet durch die geometrische Gestalt einer Kugel oer eines Ellipsoids oder eines Segments davon.

13. Schmelzklebstoffkörper nach Anspruch 12, gekennzeichnet durch erhabene und/oder eingefurchte Zeichen (7) auf seiner Oberfläche.

2

4

7

1

3

5

**FIG. 1**

**FIG. 2**

3

6
6

**FIG. 3**

2

3